**Europäisches Patentamt**

**European Patent Office**

**Office européen des brevets**

(19)

(11) Veröffentlichungsnummer : **0 235 211**
**B1**

(12) # EUROPÄISCHE PATENTSCHRIFT

(45) Veröffentlichungstag der Patentschrift :
**11.10.89**

(21) Anmeldenummer : **86905201.9**

(22) Anmeldetag : **29.08.86**

(86) Internationale Anmeldenummer :
**PCT/DE 86/00344**

(87) Internationale Veröffentlichungsnummer :
**WO/8701355 (12.03.87 Gazette 87/06)**

(51) Int. Cl.⁴ : **B 64 D 11/06**

(54) SITZ FÜR EINEN FLUGBEGLEITER IN EINEM LUFTFAHRZEUG.

(30) Priorität : **30.08.85 DE 3531139**

(43) Veröffentlichungstag der Anmeldung :
**09.09.87 Patentblatt 87/37**

(45) Bekanntmachung des Hinweises auf die Patenterteilung : **11.10.89 Patentblatt 89/41**

(84) Benannte Vertragsstaaten :
**FR GB**

(56) Entgegenhaltungen :
**DE—A— 1 136 592**
**FR—A— 804 010**
**US—A— 4 460 215**

(73) Patentinhaber : **Messerschmitt-Bölkow-Blohm Gesellschaft mit beschränkter Haftung**
**Postfach 950109**
**D-2103 Hamburg 95 (DE)**

(72) Erfinder : **BAYMAK, Faruk**
**Ostermeyerstrasse 18**
**D-2000 Hamburg 52 (DE)**
Erfinder : **STÜBEN, Helmut**
**Minneweg 20**
**D-2162 Grünendeich (DE)**

EP 0 235 211 B1

**Beschreibung**

Die Erfindung bezieht sich auf einen Sitz nach dem Oberbegriff des Anspruchs 1.

Die dem Oberbegriff des Anspruchs 1 entsprechende US-A-4,460,215 zeigt einen Flugbegleitersitz, der aufgabengemäß folgende Eigenschaften aufweisen soll ;
- einen geringen Platzbedarf in zusammengelegtem Zustand,
- ein minimales Gewicht und
- eine erleichterte Montage.

In der Hauptsache zeigt diese Schrift eine vorteilhafte Ausgestaltung der Anlenkung des Sitzteils, wodurch eine Schrägstellung der Rückenlehne bei herausgeklapptem Sitzteil erreicht wird. Fig. 5 der Schrift zeigt, daß der Sitz vor dem Einbau aus einer großen Anzahl einzelner Teile, einschließlich einzuhängender Federn, besteht, die teils zur Sitzteil-Baugruppe, teils zur Rückenlehnen-Baugruppe gehören. Dabei ist zu beachten, daß am fertigen Sitz bestimmte Elemente der einen Baugruppe mit bestimmten Teilen der anderen Baugruppe zusammenwirken müssen und umgekehrt. Dies erfordert ein sehr genaues Arbeiten bei der Montage. Das Bild 5 nach obiger US-PS zeigt, insbesondere am Beispiel der Rückenlehne, daß bestimmte Gruppen erst dann zusammengebaut werden können, nachdem die sie tragenden Beschläge an der Wand montiert sind. Auf diese Weise wird der Endzusammenbau des Sitzes in die Flugzeugkabine verlegt. Dieses konzept läßt außer Acht, daß bei der Endausstattung eines Flugzeuges alle innerhalb der Kabine auszuführenden Arbeiten mit möglichst wenigen Handgriffen möglichst rasch ausführbar sein sollten, damit sich die hier arbeitenden Personen gegenseitig aufgrund der Platzverhältnisse möglichst wenig behindern. Es ist also erkennbar, daß die Ausführung so qualifizierter Arbeiten wie die Montage des Sitzes nach dieser PS dazu führt, daß andere am Ort geplante Arbeiten für eine nur schwer tolerierbare Zeitdauer behindert oder erschwert werden. Hierdurch ergeben sich Wartezeiten, wordurch die Kosten der gesamten Einbauten letztlich erhöht werden. Nachdem dieser Sitz bereits funktionsfertig montiert ist, sind noch die beiden als getrennte Einzelteile bereitgestellten Seitenteile 49 an den jeweils getrennt an der Wand angebrachten Beschlägen 5, 7 und 9 zu befestigen. Dies soll zwar durch Schnellverschlüsse geschehen, kann aber nur dann reibungslos erfolgen, wenn die besagten Beschläge exakt an den richtigen Positionen angebracht sind.

Demgemäß liegt der Erfindung die Aufgabe zugrunde, einen gattungsgemäßen Sitz derart auszubilden, daß daß er bezüglich Platzbedarf, Gewicht, Sitzkomfort und Herstellkosten gegenüber der bisherigen einschlägigen Lösung deutliche Verbesserungen aufweist, wobei die Montagekosten dadurch gesenkt werden, daß der Sitz mit wenigen einfachen Handgriffen innerhalb der Flugzeugkabine montierbar ist.

Diese Aufgabe wird bei einem gattungsgemäßen Sitz durch die kennzeichnenden Merkmale des Patentanspruchs 1 gelöst. Vorteilhafte Weiterbildungen der Erfindung sind in den Unteransprüchen angegeben.

Durch die erfindungsgemäße Lösung werden die Herstellkosten des Sitzes gesenkt. Dies ist insbesondere durch eine minimale Anzahl von Einzelteilen erreicht. Aufgrund der Erfindung ergeben sich insbesondere Vorteile bei der Montage des Sitzes im Flugzeug, da die hierbei anfallenden Arbeiten auf ein Minimum reduziert sind.

Die Lösung nach Anspruch 4 besteht in einer sehr raumsparenden Doppelanordnung.

Die Anordnung nach Anspruch 5 bietet eine verbesserte Raumausnutzung.

Die Anordnung nach Anspruch 6 kann auch dann eingebaut werden, wenn sich am Einhauort keine Wand befindet.

Die Erfindung ist anhand der Zeichnung dargestellt und in der Beispielbeschreibung näher erläutert. Es zeigen

Fig. 1 eine Ansicht eines Sitzes,

Fig. 2 eine Seitenansicht des Sitzes nach Fig. 1,

Fig. 3 eine Doppelanordnung des Sitzes nach Fig. 2,

Fig. 4 den Teilschnitt IV-IV nach Fig. 1,

Fig. 5 den Teilschnitt V-V nach Fig. 1,

Fig. 6 die Einzelheit VI-VI nach Fig. 2,

Fig. 7 einen Sitz mit einer Person,

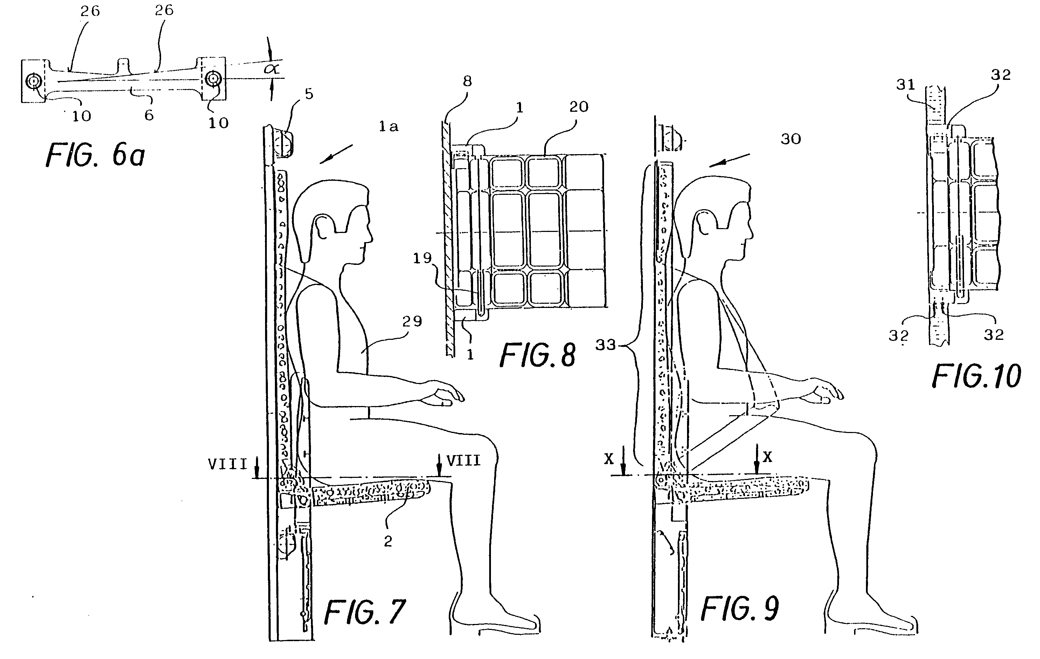

Fig .8 den Schnitt VIII-VIII nach Fig. 7,

Fig. 9 einen eingelassenen Sitz,

Fig. 10 den Schnitt X-X nach Fig. 9,

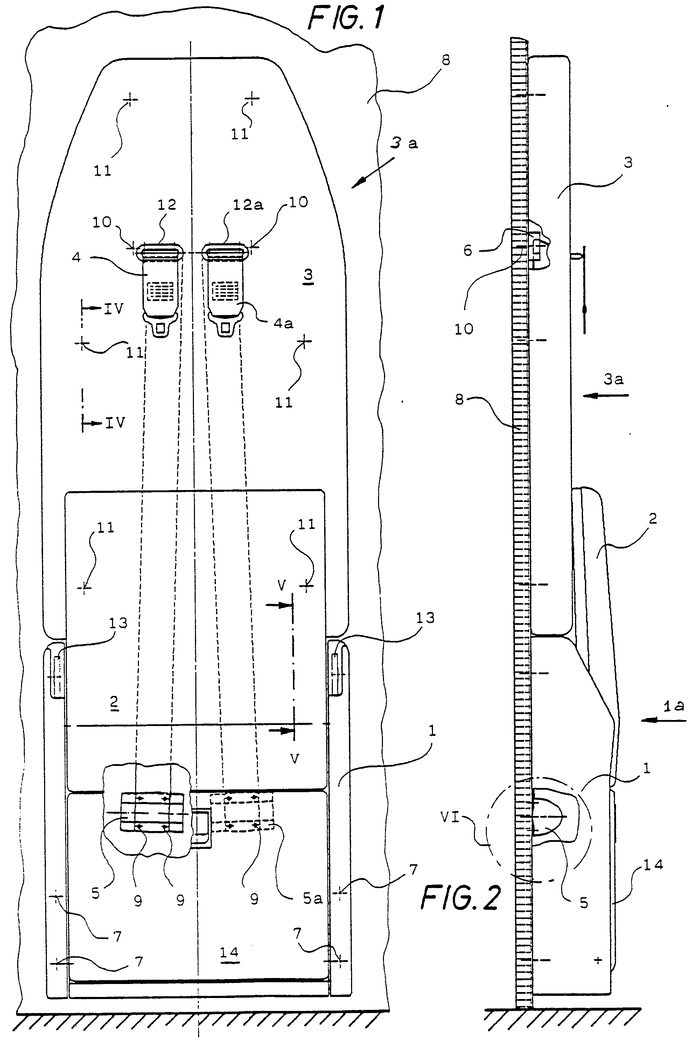

Die Figuren 1 und 2 zeigen einen Sitz 1a, im wesentlichen bestehend aus einem in einer Halterung 1 klappbar gelagerten Sitzteil 2, einer Rückenlehne (Rückenpolster) 3 mit integriertem Kopfteil und einem Sicherheitsgurtsystem, wobei dieses System im wesentlichen aus zwei Schultergurten 4 und 4a, zwei Aufrollautomaten 5 und 5a und einem Umlenkbeschlag 6 sowie einem hier nicht gezeigten Beckengurt besteht. Die Halterung 1 bildet mit dem Sitzteil 2 eine zusammenhängende Baugruppe 1a und ist an den Stellen 7 mittels Schraubenverbindungen an einer Wand 8 befestigt. Die Automaten 5 und 5a sowie der Beschlag 6 sind an Punkten 9 bzw. 10 mit der Wand 8 verschraubt. Die das aus einem geeigneten Material bestehende Rückenpolster 3 umfassende Baugruppe 3a weist weiterhin an der wandseitigen Fläche des Polsters 3 eine dünnwandige, hier nicht gezeigte Versteifung auf, die mit hier nicht gezeigten üblichen Befestigungsmitteln versehen ist, wodurch die Baugruppe 3a in den Stellen 11 an der Wand 8 befestigt ist. Dabei ist die erforderliche Freigängigkeit der hinter der Baugruppe 3a verlaufenden Gurte 4 und 4a durch entsprechende Formgebung der Versteifung sichergestellt. Die Enden der Gurte 4 und 4a sind durch im Polster 3 befindliche Öffnungen 12 und 12a geführt. Durch geeignete Gurtstopper ist sichergestellt, daß die Gurte 4 und 4a nur bis zu der dargestellten Position aufgerollt werden. Die Enden des nicht gezeigten Beckengurtes werden jeweils durch einen Beschlag 13 gehalten. Der unterhalb des Sitzteils befindliche Bereich der Halterung 1 ist als Behälter für Notausrüstungen ausgebildet und durch eine Klappe 14 verschlossen. Bei diesem Sitz werden alle im Betrieb am Sitz angreifenden Lasten - bis auf die Druckkräfte des Polsters - über die Halterung bzw. über die Schultergurte 4 und 4a direkt in die Wand 8 eingeleitet. Die Wand 8 selbst ist derart dimensioniert, daß sie die aus den maßgebenden Lastfällen resultierenden Kräfte sicher aufnimmt. Es hat sich gezeigt, daß der hierzu erfoderliche, dimensionierungsbedingte Mehraufwand sehr gering ist.

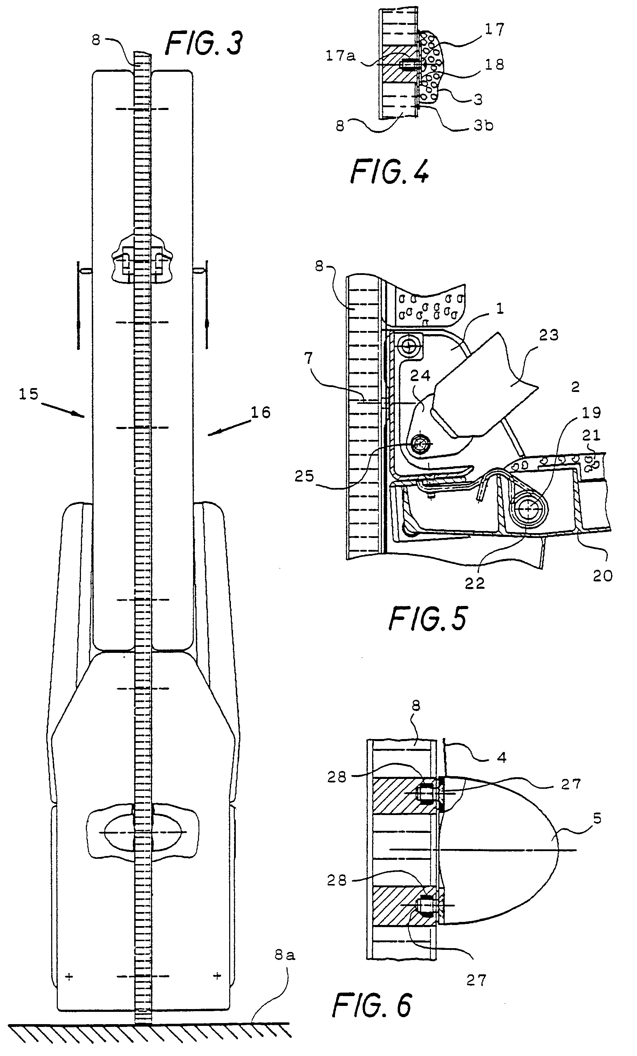

Figur 3 zeigt einen Fußboden 8a und eine Wand 8, an der hier zwei Sitze 15 und 16 der vorbeschriebenen Art befestigt sind. Diese Sitze sind beidseitig der Wand 8 unter Verwendung derselben Anschlußpunkte für beide Sitze 15 und 16 angeordnet. Die damit hergestellte gegenläufige Doppelanordnung ist in jedem Falle kosten- und gewichtsgünstig und bringt in bestimmten Einbaufällen entscheidende Raumvorteile.

Figur 4 zeigt schematisch einen Teilschnitt IV-IV nach Fig. 1 mit der Wand 8, dem Polster 3 und der Versteifung 3a. Eine Schraube 17 ist in einen wandfesten Gewindeeinsatz 17a selbstsichernd eingeschraubt. Die Versteifung 3a weist an allen Befestigungspunkten schlüssellochförmige Öffnungen auf, so daß das Polster durch einfaches Ansetzen und Absenken montierbar ist. Eine elastische Scheibe 18 stellt dabei jeweils eine ausreichende Klemmwirkung sicher.

Figur 5 zeigt den Schnitt V-V gemäß Fig. 1 mit der Wand 8 und dem in Sitzposition befindlichen, um einen Lagerzapfen 19 klappbaren Sitzteil 2. Dieses wird im wesentlichen durch eine Tragplatte 20 und ein Polster 21 gebildet. Infolge einer Feder 22 wird das Sitzteil 2 in unbelastetem Zustand in die Ruhelage gemäß den Figuren 1 und 3 geklappt. Das Ende des mit 23 bezeichneten Beckengurtes ist mit einem Beschlag 24 versehen, der mittels einer Schraube 25 am Gerüst 26 der Halterung 1 befestigt ist. Die Figur zeigt weiterhin einen Anschlußpunkt 7, in dem die Halterung 1 durch eine Schraube mit der Wand 8 verbunden ist.

Figur 6 zeigt die Einzelheit VI nach Fig. 2. Der Aufrollautomat 5 ist mittels Schrauben 27 befestigt, die in wandseitige Gewindeeinsätze 28 eingeschraubt sind. Der Gurt 4 ist in einem geringen Abstand zur Wand 8 zum hier nicht gezeigten Umlenkbeschlag 6 geführt. Bei der Montage dieses Sitzes werden zuerst die Elemente des als Einbausatz bereitgestellten Gurtsystems montiert.

Figur 6a zeigt eine Ansicht des Umlenkbeschlages 6 mit den beiden Befestigungspunkten 10. Der Beschlag weist je Gurt eine Umlenk-Kante 26 auf, die beide infolge eines Winkels α eine Flache V-Form miteinander bilden. Durch die hiermit erreichte Schrägstellung der Umenk-Kanten 26 wird erreicht, daß sich die Gurte 4, 4a flächig an eine Person anlegen, ohne mit ihren Kanten zu scheuern.

Figur 7 zeigt einen Sitz 1a, im wesentlichen entsprechend Fig. 1, mit einer Personn 29. Hier ist das Sitzteil 2 herausgeklappt gezeigt. Der in Fig. 8 dargestellte Schnitt zeigt die Tragplatte 20 mit mit einem Lagerzapfen 19 ohne das Sitzpolster in der Ansicht. Die Wand 8 hat eine konstante Dicke. Die Verbindung der Halterung 1 mit der Wand 8 ist wie vorbeschrieben ausgeführt. Die Fig. 7 zeigt eine Ausgestaltung, wobei die Aufrollautomaten 5, 5a oberhalb des Kopfpolsters an der Wand 8 angeordnet sind.

Figur 9 zeigt eine Anordnung eines Sitzes 30, der in einer Wand 31 eingelassen ist. Der in Figur 10 dargestellte Schnitt zeigt, daß die betreffende Halterung 1 in diesem Falle seitliche Anschlußpunkte 32 zur Befestigung an der Wand 31 aufweist. Die im wesentlichen das Rückenpolster 3 umfassende Baugruppe ist hier mit 33 bezeichnet und ist entsprechend der Halterung 1 an der Wand 31 befestigt. Weiterhin weist die Baugruppe 33 nicht gezeigte Versteifungen zur Krafteinleitung in die Wand 31 auf.

Im Falle der gegenläufigen Anordnung der Sitze kann es erforderlich sein, daß die Sitze einen gegenseitigen Versatz aufweisen. Hierdurch werden für beide Sitze unterschiedliche Anschlußpunkte erforderlich.

Bei den vorbeschriebenen Sitzen ergibt sich ein höherer Sitzkomfort dadurch, daß infolge des Wegfalls des üblichen Rahmens die Dicke der Polster erhöht werden kann.

Die Erfindung ist nicht auf die beispielhaft gezeigten Lösungen beschränkt, sondern sie erstreckt sich auch auf alle anderen, im Rahmen der Ansprüche denkbaren Ausgstaltungen.

## Patentansprüche

1. Sitz für einen Flugbegleiter in einem Flugzeug, zur Befestigung an einer tragenden Struktur, wie einer Kabinenwand (8), im wesentlichen bestehend aus einem in einer Halterung (1) klappbar gelagerten Sitzteil (2), einer Rückenlehne (3) mit einem Kopfpolster und mit einem Sicherheitsgurtsystem, wobei der einbaufertige Sitz aus mindestens zwei getrennten Baugruppen besteht, und die erste Baugruppe (1a) im wesentlichen den klappbaren Sitzteil und dessen Halterung und die zweite Baugruppe (3a) im wesentlichen die Rückenlehne umfaßt, dadurch gekennzeichnet, daß die Elemente (2, 3) beider Baugruppen vor deren Montage jeweils weitgehend integriert sind, wobei die Rückenlehne auf ihrer der Kabinenwand zugekehrten Seite schlüssellochförmige Öffnungen aufweist und die Halterung (1) des klappbaren Sitzteils derart ausgebildet ist, daß ihre Befestigungsstellen auch im integrieten Zustand der Baugruppe zugänglich sind.

2. Sitz nach Anspruch 1, dadurch gekennzeichnet, daß die Elemente (4, 4a, 5, 5a) des Sicherheitsgurtsystems vormontiert sind.

3. Sitz nach Anspruch 1 oder 2, dadurch gekennzeichnet, daß für die Schultergurte (4, 4a) eine Umlenkung (Beschlag 6) vorgesehen ist, deren Umlenk-Kanten (26) miteinander eine flache V-Form bilden.

4. Sitz nach einem der Ansprüche 1 bis 3, dadurch gennzeichnet, daß beidseitig der Struktur (Wand 8) je ein Sitz (15, 16) in gegenläufiger Orientierung vorgesehen ist, wobei für beide Sitze (15, 16) annähernd dieselben Anschlußpunkte (7, 9, 10, 11) verwendet werden.

5. Sitz nach einem der Ansprüche 1 bis 4, dadurch gekennzeichnet, daß die Struktur (Wand 8) eine Mulde aufweist, in die der Sitz eingelassen ist.

## Claims

1. A seat for an aircraft occupant in an aircraft, for fixing to a supporting structure, such as a cabin wall (8), substantially comprising a seat part (2) pivotally mounted in a mounting (1), a backrest (3) with a head cushion and with a safety belt system, the seat when ready for installation comprising at least two separate groups of components and the first group of components (1a) essentially includes the pivotal seat part and its mounting and the second group of components (3a) essentially includes the backrest, characterised in that the elements (2, 3) of both groups of components are largely integrated before assembly in each case, the backrest having keyhole shaped openings on its side facing the cabin wall and the mounting (1) of the pivotal seat part is so formed that its fixing points are accessible even when the group of components is integrated.

2. A seat according to claim 1, characterised in that the elements (4, 4a, 5, 5a) of the safety belt system are pre-mounted.

3. A seat according to claim 1 or 2, characterised in that a guide means (fitting 6) is provided for the shoulder belts (4, 4a), its guide edges (26) together forming a flat V-shape.

4. A seat according to any one of claims 1 to 3, characterised in that on both sides od the structure (wall 8) a seat (15, 16) in each case is provided in oppositely directed orientation, virtually the same connection points (7, 9, 10, 11) being used for both seats (15, 16).

5. A seat according to any one of claims 1 to 4, characterised in that the structure (wall 8) has a depression into which the seat is inserted.

## Revendications

1. Siège de passager d'avion destiné à être fixé à une structure portante comme une paroi de cabine (8), siège qui se compose principalement d'une assise (2) rabattable reliée à un support (1), d'un dossier (3) muni d'un appui-tête et d'un système à ceinture de sécurité, le siège prêt à être monté se composant d'au moins deux ensembles distincts et le premier (1a) est formé principalement de l'assise rabattable et de son support et le second ensemble (3a) se compose principalement du dossier, siège caractérisé en ce que les éléments (2, 3) des deux groupes sont respectivement très largement intégrés avant leur montage et le dossier comporte sur son côté tourné vers la paroi de la cabine, des orifices en forme de trous de serrures et le support (1) de l'assise rabattable est réalisé pour que ses points de fixation soient accessibles également à l'état intégré de l'ensemble.

2. Siège selon la revendication 1, caractérisé en ce que les éléments (4, 4a, 5, 5a) du système de sécurité sont préfabriqués.

3. Siège selon la revendication 1 ou 2, caractérisé en ce qu'il est prévu un renvoi (pièce de renvoi 6) pour les ceintures supérieures (4, 4a) et dont les arêtes de renvoi (26) forment entre elles une section en V aplatie.

4. Siège selon l'une des revendications 1 à 3, caractérisé en ce que de part et d'autre de la structure (paroi 8) il est prévu un siège (15, 16) orienté de manière opposée et les deux sièges (15, 16) utilisent pratiquement les mêmes points d'accrochage (7, 9, 10, 11).

5. Siège selon l'une des revendications 1 à 4, caractérisé en ce que la structure (paroi 8) comporte une cavité dans laquelle est intégré le siège.

## FIG.1

## FIG.2

**FIG. 3**

**FIG. 4**

**FIG. 5**

**FIG. 6**

FIG.10

FIG.9

FIG.8

FIG.7

FIG. 6a

3